(19) Europäisches Patentamt
European Patent Office
Office européen des brevets

(11) EP 0 937 737 A1

(12) EUROPÄISCHE PATENTANMELDUNG

(43) Veröffentlichungstag:
25.08.1999 Patentblatt 1999/34

(21) Anmeldenummer: 98124207.6

(22) Anmeldetag: 17.12.1998

(51) Int. Cl.$^6$: **C08G 77/26**, C08G 77/28, C08G 77/388, C08G 77/392, C09D 183/08

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 19.02.1998 DE 19807044

(71) Anmelder: Wacker-Chemie GmbH
81737 München (DE)

(72) Erfinder:
- Dauth, Jochen, Dr.
84489 Burghausen (DE)
- Gratzl, Petra
84577 Tüssling (DE)

(74) Vertreter:
Fritz, Helmut, Dr. et al
Wacker-Chemie GmbH,
Zentralabteilung Patente,
Marken und Lizenzen,
Hanns-Seidel-Platz 4
81737 München (DE)

# (54) Organosiliciumverbindungen mit polyhydroxyfunktionellen Kohlenwasserstoffresten, deren Herstellung und Verwendung

(57) Beschrieben werden neue polyhydroxyfunktionelle Kohlenwasserstoffreste aufweisende Organosiliciumverbindungen mit Einheiten der Formel

$$A_aR_bSiX_cO_{\frac{4-(a+b+c)}{2}} \qquad (I),$$

wobei R und X die in Anspruch 1 dafür angegebene Bedeutung haben,
A ein Rest der Formel

$$-R^2[-NR^3-L]_y \text{ oder } -R^2[-S-L]_y \qquad (III)$$

ist, wobei $R^2$ einen zweiwertigen oder dreiwertigen Kohlenwasserstoffrest mit 2 bis 50 Kohlenstoffatomen bedeutet, der durch Sauerstoffatome unterbrochen sein kann und der durch eine oder mehrere Gruppen der Formeln

$$-\overset{\overset{O}{\|}}{C}-O-,\quad -NR^3-,\quad -O-\quad \text{und}\quad -S-$$

substituiert ist,
mit der Maßgabe, daß mindestens ein Rest der Formel -C(=O)-O-enthalten ist,
$R^3$ ein Wasserstoffatom oder einen gegebenenfalls mit einer Gruppe -C(O)- substituierten Kohlenwasserstoffrest mit 1 bis 20 Kohlenstoffatom(en) darstellt,
y entsprechend der Wertigkeit von Rest $R^2$ 1 oder 2 ist,
L einen polyhydroxyfunktionellen Kohlenwasserstoffrest bedeutet,

EP 0 937 737 A1

a 0, 1 oder 2, b 0, 1, 2 oder 3, c 0, 1, 2 oder 3,
und die Summe $a+b+c \leq 4$ ist,
mit der Maßgabe, daß je Molekül mindestens ein Rest A enthalten ist.

## Beschreibung

Organosiliciumverbindungen mit kovalent gebundenen polyhydroxyfunktionellen Kohlenwasserstoffresten sind in der Literatur vielfältig bekannt.

In EP-A 385 396 (National Starch and Chemical Investment Holding Corporation, offengelegt am 05.09.90) werden Alkoxysilane mit Polysaccharidfunktionen beschrieben, die durch eine radikalische Copolymerisation von ungesättigten Silanen mit polymerisierbaren Polysaccharidverbindungen weiter umgesetzt werden können. Das Polysaccharid ist dabei über eine SiC-Funktion an das Siliciumatom gebunden, die Ether-, Ester- und Amidgruppen enthalten kann. Poly-Siloxan-Polysaccharid-Copolymere werden nicht beschrieben. Die unselektive Anbindung von Silanen an Polysaccharide nach dem beschriebenen Verfahren würde bei der Kondensation zu Polysiloxanen unweigerlich zur Vergelung führen.

Glycosidreste aufweisende Organosiliciumverbindungen und Verfahren zu deren Herstellung werden in EP-A 612 759 (Wacker-Chemie GmbH, veröffentlicht am 31.08.94) bzw. der korrespondierenden CA-A 2 114 922 durch Kondensation von hydroxyalkylfunktionellen Organosiliciumverbindungen mit Mono- und/oder Oligosacchariden erhalten. Die Synthese bedarf immer der Verwendung eines Übergangsmetallkatalysators. Die Kondensationsreaktion verläuft unvollständig, wobei die überschüssigen Oligosaccharide nicht mehr entfernt werden können.

Siliconelastomere für Kontaktlinsen, die durch eine Hydrosilylierungsreaktion hergestellt werden können und gleichzeitig Epoxyfunktionen tragen, auf die Saccharidverbindungen gepfropft werden, sind in EP-B 317 377 (Essilor International, veröffentlicht am 09.06.93) bzw. der korrespondierenden US-A 4,920,751 beschrieben. Die Elastomere stellen ein benetzbares, biokompatibles Material dar.

In DE-A 43 18 536 (Bayer AG, offengelegt am 08.12.94) und DE-A 43 18 537 (Bayer AG, offengelegt am 08.12.94) werden siloxanylmodifizierte, polyhydroxylierte Kohlenwasserstoffe, deren Herstellung sowie deren Verwendung als grenzflächenaktive und grenzflächenmodifizierende Stoffe beschrieben.

Die DE-A 195 24 815 (Bayer AG, offengelegt am 09.01.97) offenbart Homo- und Copolymerisation von ungesättigten Siloxaneinheiten und hydroxyfunktionalisierte Kohlenwasserstoffreste enthaltenden Verbindungen.

Es bestand die Aufgabe, Organosiliciumverbindungen mit kovalent gebundenen, polyhydroxyfunktionellen Kohlenwasserstoffresten bereitzustellen, die in einem einfachen Verfahren unter Verwendung gut zugänglicher Ausgangsstoffe und ohne Einsatz von Übergangsmetallkatalysatoren hergestellt werden. Weiterhin bestand die Aufgabe, Organosiliciumverbindungen mit kovalent gebundenen, polyhydroxyfunktionellen Kohlenwasserstoffresten bereitzustellen, die mittels einer radikalischen Polymerisation oder Hydrosilylierungsreaktion gehärtet werden können. Die Aufgabe wird durch die Erfindung gelöst.

Gegenstand der Erfindung sind polyhydroxyfunktionelle Kohlenwasserstoffreste aufweisende Organosiliciumverbindungen mit Einheiten der Formel

$$A_aR_bSiX_cO_{\frac{4-(a+b+c)}{2}} \qquad (I),$$

wobei R gleich oder verschieden sein kann und einen einwertigen, gegebenenfalls substituierten Kohlenwasserstoffrest mit 1 bis 22 Kohlenstoffatom(en) bedeutet,

X gleich oder verschieden ist und ein Chloratom oder einen Rest der Formel -OR′ mit R′ gleich Wasserstoffatom oder Alkylrest mit 1 bis 8 Kohlenstoffatom(en), der durch Ethersauerstoffatome substituiert sein kann, oder einen Rest der Formel

$$-R^1\{[CH(CH_3)CH_2O]_e\,[CH_2CH_2O]_f\,[(CH_2)_4O]_gR^3\}_x \qquad (II)$$

bedeutet, wobei $R^1$ einen zweiwertigen oder dreiwertigen Kohlenwasserstoffrest mit 2 bis 50 Kohlenstoffatomen bedeutet, der durch Sauerstoffatome unterbrochen sein kann und der durch eine oder mehrere Gruppen der Formeln

$$\overset{O}{\overset{\|}{-C-O-}},\quad -NR^3-,\quad -O-\quad \text{und}\quad -S-$$

substituiert ist,
x entsprechend der Wertigkeit von Rest $R^1$ 1 oder 2 ist,
$R^3$ ein Wasserstoffatom oder einen gegebenenfalls mit einer Gruppe -C(O)- substituierten Kohlenwasserstoffrest mit 1 bis 20 Kohlenstoffatom(en) darstellt und
e, f und g jeweils unabhängig voneinander 0 oder eine ganze Zahl von 1 bis 50 ist, mit der Maßgabe, daß die Summe $e+f+g\geq 1$ ist,
A ein Rest der Formel

$$-R^2[-NR^3-L]_y \text{ oder } -R^2[-S-L]_y \qquad \text{(III)}$$

ist, wobei $R^2$ eine der für $R^1$ oben angegebenen Bedeutungen hat, mit der Maßgabe, daß mindestens ein Rest der Formel -C(=O)-O- enthalten ist,
y entsprechend der Wertigkeit von Rest $R^2$ 1 oder 2 ist,
und L einen polyhydroxyfunktionellen Kohlenwasserstoffrest bedeutet,
a 0, 1 oder 2,
b 0, 1, 2 oder 3,
c 0, 1, 2 oder 3,
und die Summe $a+b+c\leq 4$, bevorzugt die Summe $a+b+c\leq 3$ ist,
mit der Maßgabe, daß je Molekül mindestens ein Rest A enthalten ist.

Gegenstand der Erfindung ist weiterhin ein Verfahren zur Herstellung von polyhydroxyfunktionelle Kohlenwasserstoffreste aufweisenden Organosiliciumverbindungen, dadurch gekennzeichnet, daß Organosiliciumverbindungen (1) mit Einheiten der Formel

$$E_aR_bSiX_cO_{\frac{4-(a+b+c)}{2}} \qquad \text{(IV)},$$

wobei R, X, a, b und c die oben dafür angegebene Bedeutung haben,
E einen ein oder mehrere (Meth)acrylatgruppen aufweisenden organischen Rest bedeutet,
mit der Maßgabe, daß pro Molekül mindestens ein Rest E enthalten ist,
mit Derivaten von polyhydroxyfunktionellen Kohlenwasserstoffen (2) der Formeln

$$HNR^3\text{-}L \text{ oder } HS\text{-}L \qquad \text{(V)},$$

wobei $R^3$ und L die oben dafür angegebene Bedeutung haben, umgesetzt werden.

Die erfindungsgemäße Umsetzung kann dabei in Substanz, Lösung oder Emulsion durchgeführt werden.
Die erfindungsgemäßen Organosiliciumverbindungen besitzen vorzugsweise ein durchschnittliches Molekulargewicht ($M_n$) von 500 bis 1.000 000 g/mol, bevorzugt 5.000 bis 1.500.000 g/mol und vorzugsweise eine Viskosität von 10 bis 1.000.000 $mm^2.s^{-1}$ bei 25°C, bevorzugt 20 bis 100 000 $mm^2.s^{-1}$ bei 25°C.
Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie

der Phenyl-, Naphthyl-, Antrhryl- und Phenanthrylrest, Alkarylreste, wie o-, m-, p-Tolylreste; Xylylreste und Ethylphenylreste, und Aralkylreste, wie der Benzylrest und der Phenylethylrest.
Bevorzugt sind der Methylrest, der n-Octylrest, der n-Dodecylrest und der n-Octadecylrest.

Beispiele für halogenisierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Alkylreste R′ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste R′, die durch ein Ethersauerstoffatom substituiert sind, sind der Methoxyethyl- und Ethoxyethylrest.

Beispiele für Reste $R^1$ sind

$$-(CH_2)_3-O-\overset{O}{\overset{\|}{C}}-CH_2-CH_2-NH-$$

$$-(CH_2)_6-O-\overset{O}{\overset{\|}{C}}-CH_2-CH_2-NH-$$

$$-CH=CH-CH_2-(OCH_2CH_2)_z-O-\overset{O}{\overset{\|}{C}}-CH_2-CH_2-NH-$$

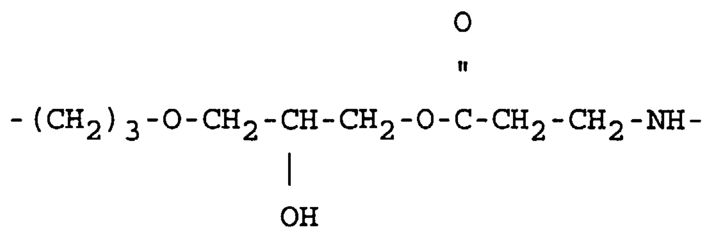

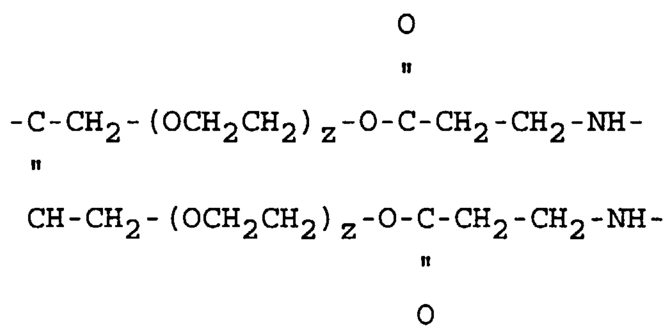

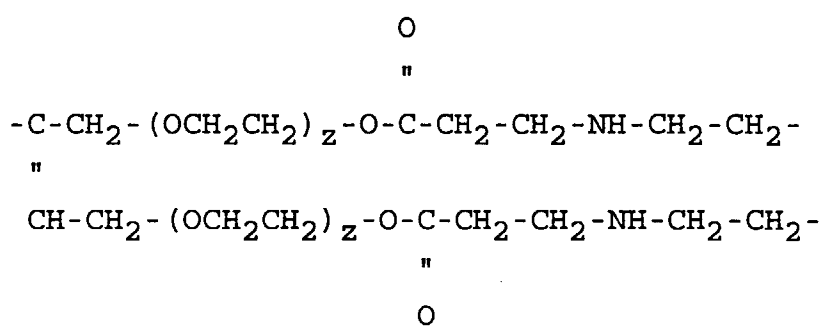

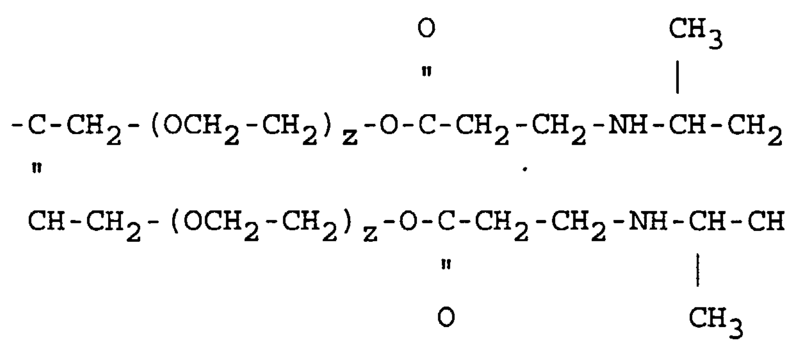 ,

wobei z die oben dafür angegebene Bedeutung hat. Bevorzugt ist $R^3$ ein Wasserstoffatom.

Vorzugsweise ist E ein Rest der Formel

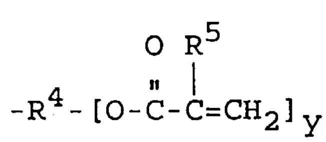 (VI),

wobei $R^4$ ein zwei- oder dreiwertiger Kohlenwasserstoffrest mit 1 bis 50 Kohlenstoffatom(en) bedeutet, der durch ein oder mehrere Sauerstoffatome unterbrochen sein kann,
$R^5$ ein Wasserstoffatom oder eine Methylgruppe ist und
y 1 oder 2, insbesondere 2 ist.

Bevorzugt ist E ein Rest der Formel

$$\begin{array}{l} HCR^6(OR^7)_z O\overset{\overset{O}{\|}}{C}CR^5{=}CH_2 \\ \| \\ -CR^6(OR^7)_z O\underset{\underset{O}{\|}}{C}CR^5{=}CH_2 \end{array}\qquad ,$$

wobei $R^5$ die oben dafür angegebene Bedeutung hat,
$R^6$ einen linearen oder verzweigten Alkylenrest mit 1 bis 6 Kohlenstoffatom(en) je Rest,
$R^7$ einen linearen oder verzweigten Alkylenrest mit 1 bis 6 Kohlenstoffatom(en) je Rest und
z 0 oder eine ganze Zahl im Wert von 1 bis 40 bedeutet,

Vorzugsweise ist $R^2$ ein Rest der Formel

$$-R^4-[O-\overset{\overset{O}{\|}}{C}-\overset{\overset{R^5}{|}}{C}H-CH_2-]_y \qquad (VII),$$

wobei $R^4$, $R^5$, und y die oben dafür angegebene Bedeutung haben.

Bevorzugt ist $R^2$ ein Rest der Formel

$$\begin{array}{l} HCR^6(OR^7)_z O\overset{\overset{O}{\|}}{C}CR^5H-CH_2- \\ \| \\ -CR^6(OR^7)_z O\underset{\underset{O}{\|}}{C}CR^5H-CH_2- \end{array}$$

wobei $R^5$, $R^6$, $R^7$ und z die oben dafür angegebene Bedeutung haben.

Beispiele für acrylatfunktionelle Reste E sind solche der Formeln:

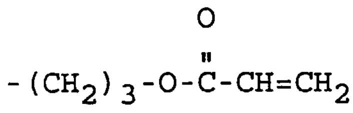

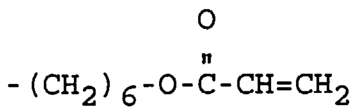

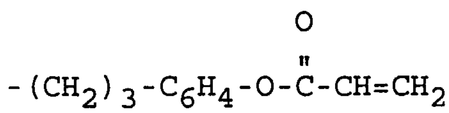

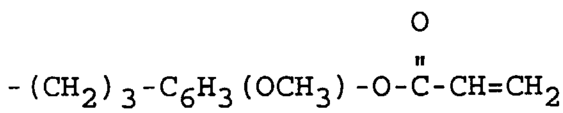

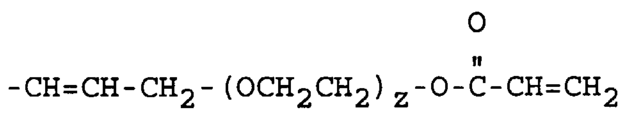

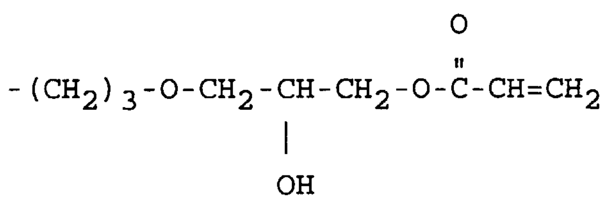

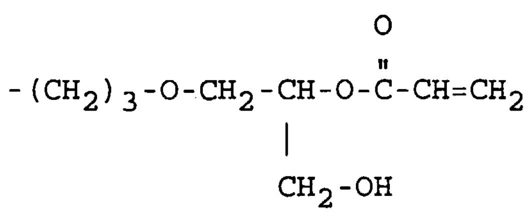

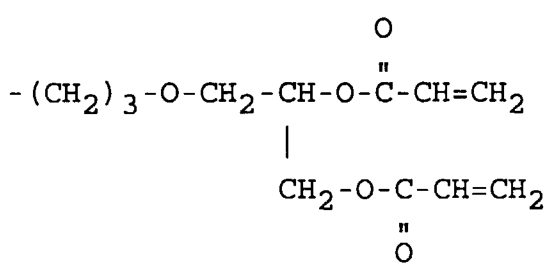

$$\begin{array}{l} -C-CH_2-(OCH_2CH_2)_z-O-\overset{O}{\overset{\|}{C}}-CH=CH_2 \\ \;\;\| \\ HC-CH_2-(OCH_2CH_2)_z-O-\underset{O}{\underset{\|}{C}}-CH=CH2 \end{array}$$

wobei z die oben dafür angegebene Bedeutung hat.

Beispiele für Reste A sind solche der Formeln

$$-(CH_2)_3-O-\overset{O}{\overset{\|}{C}}-CH_2-CH_2-NH-L$$

$$-(CH_2)_6-O-\overset{O}{\overset{\|}{C}}-CH_2-CH_2-NH-L$$

$$-(CH_2)_3-C_6H_4-O-\overset{O}{\overset{\|}{C}}-CH_2-CH_2-NH-L$$

$$-(CH_2)_3-C_6H_3(OCH_3)-O-\overset{O}{\overset{\|}{C}}-CH_2-CH_2-NH-L$$

$$-CH=CH-CH_2-(OCH_2CH_2)_z-O-\overset{O}{\overset{\|}{C}}-CH_2-CH_2-NH-L$$

$$-(CH_2)_3-O-CH_2-\underset{\begin{array}{c}|\\OH\end{array}}{CH}-CH_2-O-\overset{O}{\overset{\|}{C}}-CH_2-CH_2-NH-L$$

$$-(CH_2)_3-O-CH_2-\underset{\begin{array}{c}|\\CH_2-OH\end{array}}{CH}-O-\overset{O}{\overset{\|}{C}}-CH_2-CH_2-NH-L$$

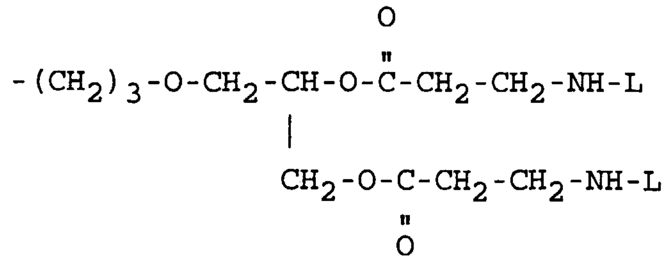

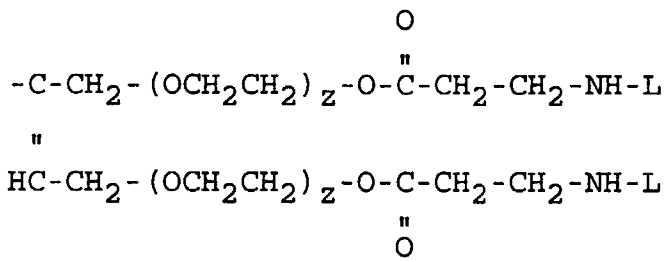

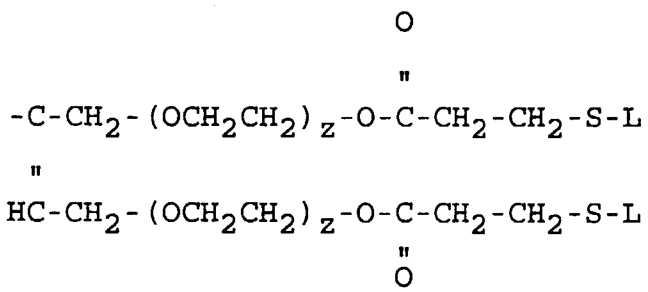

,

wobei L und z die oben dafür angegebene Bedeutung haben.

Ein bevorzugtes Beispiel für den Rest A ist solcher der Formel

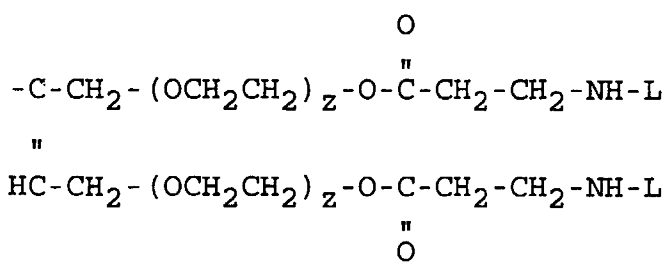

,

wobei L und z die oben dafür angegebene Bedeutung haben.

Derivate von polyhydroxyfunktionellen Kohlenwasserstoffen (2) sind vorzugsweise stickstoff- oder schwefelhaltige Derivate von Kohlenhydraten, bevorzugt stickstoff- oder schwefelhaltige Derivate von Monosacchariden, wie Aminozucker und deren Hydrochloride und Thiozucker. Beispiele hierfür sind D-Glucosamin, D-Galactosamin, D-Glucosaminsäure, L-Fucosylamin, L-Acosaminmethyl-glycosidhydrochlorid, D-Mannosamin-Hydrochlorid, 2-Aminpalatinit und 1-N-Alkyl-amino-palatinit.

Vorzugsweise sind die Gruppen -$NR^3$-L und -S-L daher Reste von stickstoff- oder schwefelhaltigen Derivaten von Kohlenhydraten, bevorzugt Reste von stickstoff- oder schwefelhaltigen Derivaten von Monosacchariden, wie Reste von Aminozucker und deren Hydrochloride und Reste von Thiozucker.

Bevorzugt als polyhydroxyfunktionelle Kohlenwasserstoffreste aufweisende Organosiliciumverbindungen sind solche der Formel

$$A_gR_{3-g}SiO(SiR_2O)_o(SiRAO)_mSiR_{3-g}A_g \quad \text{(VIII)},$$

wobei R und A die oben dafür angegebene Bedeutung haben,
g 0, 1 oder 2,
m 0 oder eine ganze Zahl im Wert von 1 bis 1 000 und
o 0 oder eine ganze Zahl im Wert von 1 bis 1 000 ist,
mit der Maßgabe, daß je Molekül mindestens ein Rest A enthalten ist,

Vorzugsweise sind die bei dem erfindungsgemäßen Verfahren eingesetzten Organosiliciumverbindungen (1) solche der allgemeinen Formel

$$E_gR_{3-g}SiO(SiR_2O)_o(SiREO)_mSiR_{3-g}E_g \quad \text{(IX)},$$

wobei R, E, g, o und m die oben dafür angegebene Bedeutung haben,
mit der Maßgabe, daß je Molekül mindestens ein Rest E enthalten ist.

Verfahren zur Herstellung der bei dem erfindungsgemäßen Verfahren eingesetzten Organosiliciumverbindungen (1) sind bekannt und beispielsweise in US-A 5,593,787 (Wacker-Chemie GmbH, ausgegeben am 14.01.1997) beschrieben.

Bei dem erfindungsgemäßen Verfahren werden pro Mol des Restes E der eingesetzten Organosiliciumverbindung (1) vorzugsweise 0,0001 bis 4 Mol, bevorzugt 0,001 bis 2 Mol und besonders bevorzugt 0,01 bis 2 Mol polyhydroxyfunktionelle Kohlenwasserstoffe (2) eingesetzt.

Bei dem erfindungsgemäßen Verfahren können alle bekannte Verbindungen, die Michael-Addition-ähnliche Reaktionen katalysieren, wie beispielsweise Eisessig, Zinn(IV)chlorid, Natriummethylat, Alkaliamide, Ammonium-, Sulfonium- und Phosphoniumsalze eingesetzt werden, was nicht bevorzugt ist.

Des weiteren können bei dem erfindungsgemäßen Verfahren Radikalinitiatoren, wie Azoverbindungen und/oder Peroxoverbindungen, als Katalysatoren zugesetzt werden, was nicht bevorzugt ist. Falls derartige Katalysatoren eingesetzt werden, handelt es sich um Mengen von vorzugsweise 0,1 bis 5 Gew.-%, bezogen auf das Gesamtgewicht der Organosiliciumverbindung (1) und der polyhydroxyfunktionellen Kohlenwasserstoffe (2).

Bei dem erfindungsgemäßen Verfahren können Lösungsmittel und Wasser oder Mischungen aus beiden mitverwendet werden. Beispiele für organische Lösungsmittel sind Toluol, Xylol, 2-Butanol, 1-Butanol, n-Butylacetat, Isopropanol und Dimethoxyethan.

Vorzugsweise wird mitverwendetes organisches Lösungsmittel nach der erfindungsgemäßen Umsetzung entfernt.

Die erfindungsgemäßen polyhydroxyfunktionellen Kohlenwasserstoffreste aufweisenden Organosiliciumverbindungen können gegebenenfalls weiterhin mit acylierenden Materialien, wie Essigsäureanhydrid, Acetylchlorid oder Isocyanaten umgesetzt werden, um überschüssige Amingruppen für weitere Michael-Addition-ähnliche Reaktionen zu neutralisieren.

Werden als Derivate von polyhydroxyfunktionellen Kohlenwasserstoffen (2) stickstoffhaltige Derivate von Kohlenhydraten als Hydrochlorid eingesetzt, können organische oder anorganische Basen zur Neutralisation zugesetzt werden.

Das erfindungsgemäße Verfahren wird vorzugsweise beim Druck der umgebenden Atmosphäre, also etwa bei 1 020 hPa (abs.) durchgeführt. Es kann aber auch bei höheren oder niedrigeren Drücken durchgeführt werden. Ferner wird das erfindungsgemäße Verfahren vorzugsweise bei einer Temperatur von 25°C bis 150°C, bevorzugt 25°C bis 120°C, besonders bevorzugt 25°C bis 100 °C, durchgeführt.

Die nach dem erfindungsgemäßen Verfahren erhaltenen polyhydroxyfunktionelle Kohlenwasserstoffreste aufweisenden Organosiliciumverbindungen können mit Organopolysiloxanen (3), ausgewählt aus der Gruppe, bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

$$R_3SiO(SiR_2O)_rSiR_3 ,$$

wobei R die oben dafür angegebene Bedeutung hat und
r 0 oder eine ganze Zahl im Wert von 1 bis 1 500 ist,
als lineare, endständige Hydroxylgruppen aufweisende Organopolysiloxane solche der Formel

$$HO(SiR_2O)_sH,$$

wobei R die oben dafür angegebene Bedeutung hat und
s eine ganze Zahl im Wert von 1 bis 1.500 ist,
als cyclische Organopolysiloxane solche der Formel

$$(R_2SiO)_t,$$

wobei R die oben dafür angegebene Bedeutung hat und
t eine ganze Zahl von 3 bis 12 ist,
und als Mischpolymerisate solche als Einheiten der Formel

$$R_2SiO \text{ und } RSiO_{3/2},$$

wobei R die oben dafür angegebene Bedeutung hat, eingesetzt werden.

Die Mengenverhältnisse der bei der gegebenenfalls durchgeführten Equilibrierung eingesetzten Organopolysiloxane (3) und polyhydroxyfunktionelle Kohlenwasserstoffreste aufweisenden Organopolysiliciumverbindungen werden lediglich durch den gewünschten Anteil der polyhydroxyfunktionellen Kohlenwasserstoffreste in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden saure oder basische Katalysatoren, welche die Equilibrierung fördern, eingesetzt.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gewichts-ppm (= Teile je Million), insbesondere 50 bis 200 Gewichts-ppm, jeweils bezogen auf das Gesamtgewicht der eingesetzten Organosiliciumverbindungen, verwendet.

Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate. Bevorzugt sind Alkalihydroxide, welche in Mengen von 50 bis 10.000 Gewichts-ppm (Teile je Million), insbesondere 500 bis 2.000 Gewichts-ppm, jeweils bezogen auf das Gesamtgewicht der eingesetzten Organosiliciumverbindungen, verwendet werden.

Die gegebenenfalls durchgeführte Equilibrierung wird vorzugsweise bei 80 bis 150°C und beim Druck der umgebenden Atmosphäre, also etwa bei 1 020 hPa (abs.), durchgeführt. Falls erwünscht, können aber auch höhere oder niedrigere Drücke angewendet werden. Das Equilibrieren wird vorzugsweise in 5 bis 20 Gewichtsprozent, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Werden die Derivate der polyhydroxyfunktionellen Kohlenwasserstoffe (2) unterstöchiometrisch auf die (Meth)acrylatgruppen in Organosiliciumverbindung (1) eingesetzt, können die erfindungsgemäßen Organosiliciumverbindungen über die verbleibenden (Meth)acrylatgruppen radikalisch oder über eine Hydrosilylierung vernetzt werden.

Die erfindungsgemäßen polyhydroxyfunktionelle Kohlenwasserstoffreste und (Meth)acryloxygruppen aufweisenden Organosiliciumverbindungen weisen dann vorzugsweise Einheiten der Formel (I) und (IV) auf und enthalten bevorzugt durchschnittlich mindestens 2 Reste A und mindestens 2 Reste E, insbesondere durchschnittlich 2 bis 16 Reste A und 2 bis 10 Reste E.

Gegenstand der Erfindung sind daher strahlungshärtende Zusammensetzungen enthaltend

(A) polyhydroxyfunktionelle Kohlenwasserstoffreste und (Meth)acryloxygruppen aufweisende Organosiliciumverbindungen enthaltend Einheiten der Formel (I) und (IV) und
(B) Photosensibilisatoren.

Gegenstand der Erfindung sind weiterhin Formkörper, hergestellt durch Vernetzung der erfindungsgemäßen Zusammensetzungen.

Die erfindungsgemäßen strahlungshärtenden Zusammensetzungen werden vorzugsweise zur Herstellung von Beschichtungen, wie Überzügen, verwendet.

Gegenstand der Erfindung ist weiterhin ein Verfahren zur Herstellung von Beschichtungen, dadurch gekennzeichnet, daß die erfindungsgemäße Zusammensetzung auf das Substrat aufgetragen und durch Bestrahlung mit energiereicher Strahlung vernetzen gelassen wird.

Vorzugsweise werden die erfindungsgemäßen polyhydroxyfunktionelle Kohlenwasserstoffreste und (Meth)acryloxygruppen aufweisenden Organosiliciumverbindungen durch Licht, bevorzugt durch Ultraviolettlicht, vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel-, Quecksilberhochdrucklampen oder Eximerlampen erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxane geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Geeignete Photosensibilisatoren (B) sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphtalinsulfonsäuren, Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-[Methylthio)phenyl]-2-morpholinpropanon-1, Benzophenon; substitierte Benzophenone, wie Michlers Keton, 3-Methoxybenzophenon, 4-Dimethylaminobenzophenon, 4,-Methoxybenzophenon, 4-Chlorbenzophenon, 4,4,-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Antrachino-1,5-disulfonsäuredinatriumsalz; Benzoin; substituierte Benzoine, wie Benzoinmethylether; Benzil; 2-Naphtalinsulfonylchlorid; Benzaldehyd; Zimtsäure. Besonders bevorzugt ist Oligo[2-hydroxy-2-methyl-1-(4(1-methylvinyl)phenyl)-propanon].

Photosensibilisatoren werden in den erfindungsgemäßen Zusammensetzungen in Mengen von vorzugsweise 0,01 bis 10 Gew.-%, bevorzugt 0,5 bis 5 Gew.-%, jeweils bezogen auf das Gesamtgewicht der zu vernetzenden Organosiliciumverbindungen, eingesetzt.

Die erfindungsgemäßen Zusammensetzungen können Polymerisationsinhibitoren enthalten. Aus Gründen der besseren Handhabung ist es bevorzugt, die erfindungsgemäßen Zusammensetzungen mit geringen Mengen an Inhibitoren zu versetzen, um beispielsweise vorzeitige Vernetzung einer verwendungsfähigen Formulierung während deren Lagerung zu verhindern.

Beispiele für gegebenenfalls eingesetzte Inhibitoren sind alle gebräuchlichen, auch bisher in radikalisch ablaufenden Prozessen eingesetzten Inhibitoren, wie Hydrochinon, 4-Methoxyphenol, 2,6-Ditert.butyl-4-methylphenol oder Phenothiazin. Vorzugsweise werden Inhibitoren in Mengen von 10 bis 10 000 ppm, besonders bevorzugt 50 bis 1 000 ppm, jeweils bezogen auf das Gesamtgewicht der zu vernetzenden Organosiliciumverbindungen, eingesetzt.

Gegebenenfalls können zusätzlich monomere oder oligomere, organische (Meth)acrylatester oder deren Gemische in einer Menge von vorzugsweise 0,1 bis 10 Gewichtsprozent, bezogen auf das Gesamtgewicht der zu vernetzenden Organosiliciumverbindungen, zugegeben werden, wobei dies nicht bevorzugt ist.

Beispiele für Substrate, auf welche die erfindungsgemäßen Beschichtungen aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Beschichtungen beispielsweise in der Trennpapierbeschichtung.

Das Auftragen der erfindungsgemäßen strahlungshärtenden Zusammensetzungen auf die zu beschichtenden Substrate kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken; z.B. mittels einer Offset-Gravurüberzugsvorrichtung, Messer- oder Rakelbeschichtung.

Die erfindungsgemäßen Organosiliciumverbindungen zeichnen sich durch ihre einfache Darstellungsweise und die Möglichkeit der gezielten Abstufung der Hydrophilie aus.

Im Gegensatz zu Hydrosilylierungsreaktionen benötigt man bei der Michael-Reaktion-ähnlichen Addition kein Übergangsmetall zur Katalyse. Durch die niedrigen Reaktionstemperaturen ist die zusätzliche thermische Belastung der (Meth)acrylatgruppen bei der Umsetzung gering.

Werden bei dem erfindungsgemäßen Verfahren Derivate (2) der Formel $HNR^3$-L erwendet, entstehen nach

der Umsetzung sekundäre bzw. tertiäre Amine, die bei der radikalischen Polymerisation als Redoxpartner reagieren und die Sauerstoffempfindlichkeit der radikalischen Polymerisation reduzieren können.

Beispiel 1:

6,62 g (35,8 mmol) 1-Amino-1-deoxy-D-sorbitol werden in 80 g (1,33 mmol) Isopropanol bei Raumtemperatur gelöst und werden dann versetzt mit 50 g (35,8 mmol C=C) eines Dimethylpolysiloxans der mittleren Kettenlänge 56 mit endständigen Si-gebundenen Diacrylatgruppen der Formel

$$
\begin{array}{l}
\qquad\qquad\qquad\quad O \\
\qquad\qquad\qquad\quad \| \\
HCCH_2(OCH_2CH_2)_zOCCH{=}CH_2 \\
\;\| \\
-CCH_2(OCH_2CH_2)_zOCCH{=}CH_2 \\
\qquad\qquad\qquad\quad \| \\
\qquad\qquad\qquad\quad O
\end{array}
$$

$$z = 2.7 - 3.0,$$

das ein Doppelbindungsequivalent von ca. 1300 g/mol und eine Viskosität von 270 $mm^2/s$ bei 25°C besitzt. Die Reaktionslösung wird auf 80°C temperiert und eine Stunde lang gerührt. Nach der Filtration wird die Reaktionsmischung im Hochvakuum (1 mbar) bei 90°C bis zur Gewichtskonstanz eingeengt. Es werden 55,8 g (98,6% d.Th.) eines gelben, klaren Öles mit einer Viskosität von 184 000 $mm^2/s$ bei 40°C erhalten.

Beispiel 2:

Die Arbeitsweise von Beispiel 1 wird wiederholt mit der Abänderung, daß 3.31 g anstelle von 6,62 g 1-Amino-1-deoxy-D-sorbitol eingesetzt werden. Nach der Reaktionszeit von acht Stunden werden der Reaktionsmischung 3,7 g (36 mmol) Essigsäureanhydrid zugefügt und weitere zwei Stunden lang gerührt. Die Aufarbeitung erfolgt wie in Beispiel 1 beschrieben. Es werden 52,8 g (96,2% d.Th.) eines bräunlichen, klaren Öles mit einer Viskosität von 102 000 $mm^2/s$ bei 40°C erhalten.

Beispiel 3:

16,4 g (88,7 mmol) 1-Amino-1-deoxy-D-sorbitol werden in 100 g (1,66 mmol) Isopropanol bei Raumtemperatur gelöst und werden dann versetzt mit 50 g (88,7 mmol C=C) eines Dimethylpolysiloxans der mittleren Kettenlänge 15 mit endständigen Si-gebundenen Diacrylatgruppen der Formel analog Beispiel 1, das ein Doppelbindungsequivalent von ca. 500 g/mol und eine Viskosität von 110 $mm^2/s$ bei 25°C besitzt. Die Reaktionslösung wird auf 80°C temperiert und acht Stunden lang gerührt. Nach der Filtration wird die Reaktionsmischung im Hochvakuum eingeengt. Es werden 64,3 g (96,8% d.Th.) eines bräunlichen, klaren Öles mit einer Viskosität von 320.000 $mm^2/s$ bei 40°C erhalten.

Beispiel 4:

Die Arbeitsweise von Beispiel 1 wird wiederholt mit der Abänderung, daß 5,84 g (35,8 mmol) L-Fucosylamin anstelle von 6,62 g 1-Amino-1-deoxy-D-sorbitol eingesetzt werden. Es werden 52,9 g (94,7% d.Th.) eines gelben, klaren Öles mit einer Viskosität von 137.000 $mm^2/s$ bei 40°C erhalten.

Beispiel 5:

Die Arbeitsweise von Beispiel 1 wird wiederholt mit der Abänderung, daß 7,7 g (35,8 mmol) D-Mannosamin-Hydrochlorid und 3,62 g (35,8 mmmol) Triethylamin anstelle von 6,62 g 1-Amino-1-deoxy-D-sorbitol eingesetzt werden. Es werden 55,4 g (98,2% d.Th.) eines gelben, klaren Öles mit einer Viskosität von 172.000 $mm^2/s$ bei 40°C erhalten.

Beispiel 6:

10 g des klaren Öles, dessen Herstellung in Beispiel 2 beschrieben ist, werden mit 3 Gew.-% 2-Hydroxy-2-methyl-2-phenyl-propan-1-on versetzt. Die Mischung wird mit einem Glasstab in einer Schichtdicke von ca. 10 µm bei 70°C auf eine Glasplatte aufgebracht und in einer Stickstoffatmosphäre mit 20 ppm Restsauerstoff unter einer Hg-Lampe der 300er-Serie der Fa. Fusion drei Sekunden lang bei 65°C gehärtet. Es wird eine schmier- und abriebfreie Siliconbeschichtung erhalten.

## Patentansprüche

1. Polyhydroxyfunktionelle Kohlenwasserstoffreste aufweisende Organosiliciumverbindungen mit Einheiten der Formel

$$A_aR_bSiX_cO_{\frac{4-(a+b+c)}{2}} \quad (I),$$

wobei R gleich oder verschieden sein kann und einen einwertigen, gegebenenfalls substituierten Kohlenwasserstoffrest mit 1 bis 22 Kohlenstoffatom(en) bedeutet,
X gleich oder verschieden ist und ein Chloratom oder einen Rest der Formel -OR′ mit R′ gleich Wasserstoffatom oder Alkylrest mit 1 bis 8 Kohlenstoffatom(en), der durch Ethersauerstoffatome substituiert sein kann, oder einen Rest der Formel

$$-R^1\{[CH(CH_3)CH_2O]_e\,[CH_2CH_2O]_f\,[(CH_2)_4O]_gR^3\}_x \quad (II)$$

bedeutet, wobei $R^1$ einen zweiwertigen oder dreiwertigen Kohlenwasserstoffrest mit 2 bis 50 Kohlenstoffatomen bedeutet, der durch Sauerstoffatome unterbrochen sein kann und der durch eine oder mehrere Gruppen der Formeln

$$-\overset{\displaystyle O}{\overset{\|}{C}}-O-,\quad -NR^3-,\quad -O-\quad \text{und}\quad -S-$$

substituiert ist,
x entsprechend der Wertigkeit von Rest $R^1$ 1 oder 2 ist,
$R^3$ ein Wasserstoffatom oder einen gegebenenfalls mit einer Gruppe -C(O)- substituierten Kohlenwasserstoffrest mit 1 bis 20 Kohlenstoffatom(en) darstellt und
e, f und g jeweils unabhängig voneinander 0 oder eine ganze Zahl von 1 bis 50 ist, mit der Maßgabe, daß die Summe $e+f+g \geq 1$ ist,
A ein Rest der Formel $-R^2[-NR^3-L]_y$ oder $-R^2[-S-L]_y$ (III) ist, wobei $R^2$ eine der für $R^1$ oben angegebenen Bedeutungen hat, mit der Maßgabe, daß mindestens ein Rest der Formel -C(=O)-O- enthalten ist,
y entsprechend der Wertigkeit von Rest $R^2$ 1 oder 2 ist,
und L einen polyhydroxyfunktionellen Kohlenwasserstoffrest bedeutet,
a 0, 1 oder 2,
b 0, 1, 2 oder 3,
c 0, 1, 2 oder 3,
und die Summe $a+b+c \leq 4$ ist,
mit der Maßgabe, daß je Molekül mindestens ein Rest A enthalten ist.

2. Organosiliciumverbindungen nach Anspruch 1, dadurch gekennzeichnet, daß

$R^2$ ein Rest der Formel

$$-R^4-[Z-\overset{\overset{O}{\|}}{C}-\overset{\overset{R^5}{|}}{C}H-CH_2-]_y \qquad (VII),$$

ist,
wobei $R^4$ ein zwei- oder dreiwertiger Kohlenwasserstoffrest mit 1 bis 50 Kohlenstoffatom(en) bedeutet, der durch ein oder mehrere Sauerstoffatome unterbrochen sein kann,
$R^5$ ein Wasserstoffatom oder eine Methylgruppe ist und
y 1 oder 2 ist.

3. Verfahren zur Herstellung von polyhydroxyfunktionelle Kohlenwasserstoffreste aufweisenden Organosiliciumverbindungen, dadurch gekennzeichnet, daß Organosiliciumverbindungen (1) mit Einheiten der Formel

$$E_aR_bSiX_cO_{\frac{4-(a+b+c)}{2}} \qquad (IV),$$

wobei R, X, a, b und c die im Anspruch 1 dafür angegebene Bedeutung haben, E einen ein oder mehrere (Meth)acrylatgruppen aufweisenden organischen Rest bedeutet,
mit der Maßgabe, daß pro Molekül mindestens ein Rest E enthalten ist,
mit Derivaten von polyhydroxyfunktionellen Kohlenwasserstoffen (2) der Formeln

$$HNR^3\text{-}L \text{ oder } HS\text{-}L \qquad (V),$$

wobei $R^3$ und L die im Anspruch 1 dafür angegebene Bedeutung haben,
umgesetzt werden.

4. Verfahren nach Anspruch 3, dadurch gekennzeichnet, daß E ein Rest der Formel

$$-R^4-[O-\overset{\overset{O}{\|}}{C}-\overset{\overset{R^5}{|}}{C}=CH_2]_y \qquad (VI),$$

ist, wobei $R^4$, $R^5$ und y die in Anspruch 2 dafür angegebene Bedeutung haben.

5. Verfahren nach Anspruch 3, dadurch gekennzeichnet, daß als Organosiliciumverbindung (1) solche der allgemeinen Formel

$$E_gR_{3-g}SiO(SiR_2O)_o(SiREO)_mSiR_{3-g}E_g \qquad (IX),$$

wobei R die in Anspruch 1 dafür angegebene Bedeutung hat und E die in Anspruch 3 dafür angegebene Bedeutung hat,
g 0, 1 oder 2,
m 0 oder eine ganze Zahl im Wert von 1 bis 1 000 und
o 0 oder eine ganze Zahl im Wert von 1 bis 1 000 ist,
mit der Maßgabe, daß je Molekül mindestens ein Rest E enthalten ist.

6. Strahlungshärtende Zusammensetzungen enthaltend

(A) polyhydroxyfunktionelle Kohlenwasserstoffreste und (Meth)acrylatgruppen aufweisende Organosiliciumverbindungen enthaltend Einheiten der Formel (I) und (IV) und
(B) Photosensibilisatoren

7. Formkörper hergestellt durch Vernetzung der Zusammensetzungen gemäß Anspruch 6.

8. Formkörper gemäß Anspruch 7, dadurch gekennzeichnet, daß es sich um Beschichtungen handelt.

9. Verfahren zur Herstellung von Beschichtungen, dadurch gekennzeichnet, daß die Zusammensetzungen gemäß Anspruch 6 auf das Substrat aufgetragen und durch Bestrahlung mit energiereicher Strahlung vernetzen gelassen wird.

Europäisches Patentamt

# EUROPÄISCHER RECHERCHENBERICHT

Nummer der Anmeldung
EP 98 12 4207

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CHEMICAL ABSTRACTS, vol. 108, no. 8, 22. Februar 1988 Columbus, Ohio, US; abstract no. 56828, XP002105309 * Zusammenfassung * & JP 62 068820 A (KAO) | 1-5 | C08G77/26 C08G77/28 C08G77/388 C08G77/392 C09D183/08 |
| A | US 4 603 086 A (H. FUJII ET AL.) 29. Juli 1986 * Ansprüche 1-3 * | 3-5 | |
| A<br>D | EP 0 716 114 A (WACKER) 12. Juni 1996 * Seite 8, Zeile 55 - Zeile 59 * * Ansprüche * & US 5 593 787 A | 6-9 | |
| | | | RECHERCHIERTE SACHGEBIETE (Int.Cl.6) |
| | | | C08G C08L C09D |

Der vorliegende Recherchenbericht wurde für alle Patentansprüche erstellt

| Recherchenort | Abschlußdatum der Recherche | Prüfer |
|---|---|---|
| BERLIN | 10. Juni 1999 | Hoepfner, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR. EP 98 12 4207

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-1999

| Im Recherchenbericht angeführtes Patentdokument | Datum der Veröffentlichung | Mitglied(er) der Patentfamilie | Datum der Veröffentlichung |
|---|---|---|---|
| US 4603086 A | 29-07-1986 | JP 1905340 C | 08-02-1995 |
| | | JP 6027196 B | 13-04-1994 |
| | | JP 60190427 A | 27-09-1985 |
| EP 716114 A | 12-06-1996 | DE 4443749 A | 13-06-1996 |
| | | AT 163660 T | 15-03-1998 |
| | | CA 2162009 A | 09-06-1996 |
| | | CN 1132753 A | 09-10-1996 |
| | | DE 59501541 D | 09-04-1998 |
| | | FI 955871 A | 09-06-1996 |
| | | JP 2749543 B | 13-05-1998 |
| | | JP 8245793 A | 24-09-1996 |
| | | US 5593787 A | 14-01-1997 |

EPO FORM P0461

Für nähere Einzelheiten zu diesem Anhang : siehe Amtsblatt des Europäischen Patentamts, Nr.12/82